# EUROPÄISCHE PATENTSCHRIFT

(11) **EP 0 898 528 B1**
(45) Veröffentlichungstag und Bekanntmachung des Hinweises auf die Patenterteilung: **02.05.2003**
(21) Anmeldenummer: 98912248.6
(22) Anmeldetag: 17.02.1998
(51) Int. Cl.: B60S 1/08

(54) **VORRICHTUNG UND VERFAHREN ZUR STEUERUNG VON SCHEIBENWISCHERN**
DEVICE AND METHOD FOR CONTROLLING WINDSCREEN WIPERS
DISPOSITIF ET PROCEDE DE COMMANDE D'ESSUIE-GLACE

(30) Priorität: 12.03.1997 DE 19710099
(43) Veröffentlichungstag der Anmeldung: 03.03.1999
(73) Patentinhaber: ROBERT BOSCH GMBH, 70442 Stuttgart (DE)
(72) Erfinder: GRASS, Ansgar, D-77652 Offenburg (DE)
(86) Internationale Anmeldenummer: DE9800454
(87) Internationale Veröffentlichungsnummer: WO98040252

(56) Entgegenhaltungen:
- DE-A- 2 922 160
- DE-A- 4 417 371
- US-A- 4 866 357
- PATENT ABSTRACTS OF JAPAN vol. 016, no. 576 (M-1345), 16.Dezember 1992 & JP 04 224442 A (JIDOSHA DENKI KOGYO CO LTD), 13.August 1992,
- PATENT ABSTRACTS OF JAPAN vol. 098, no. 003, 27.Februar 1998 & JP 09 301131 A (JIDOSHA DENKI KOGYO CO LTD), 25.November 1997,

## Beschreibung

### Stand der Technik

Die Erfindung geht aus von einer Scheibenwischvorrichtung nach dem Oberbegriff des Hauptanspruchs.

Es ist bereits eine Wischanlage für Kraftfahrzeuge zum Antrieb der Wischer bekannt (DE-OS 29 22 160) bei der aus einem die Winkelgeschwindigkeit des Motors kennzeichnenden Schaltsignal in einer Auswerteschaltung eine den Nachlauf der Wischer nach dem Ausschalten des Betriebsschalters bzw. Abschalten des Motors kennzeichnende Korrekturgröße abgeleitet wird. Die Auswerteschaltung löst unter Berücksichtigung dieser Korrekturgröße ein Schaltsignal bei unterschiedlichen Winkelstellungen des Wischers aus, um den Wischer in eine Parklage abzulegen, sobald der Betriebsschalter ausgeschaltet wird.

Hierbei wird mittels eines Drehzahlfühlers mit einem ersten Zähler und eines Taktgenerators mit einem zweiten Zähler ab dem Einlaufen des Wischers in eine Parkzone bis zum Gleichstand der Zählerstände beider Zähler gezählt. Daraufhin wird das Schaltsignal zum Abschalten des Motors ausgelöst. Bei hoher Wischgeschwindigkeit wird der Wischermotor früher abgeschaltet als bei einer langsamen Wischgeschwindigkeit.

Nachteilig ist hierbei, daß die Wischgeschwindigkeit immer in einem Bereich (bzw. Parkzone) vor der Parklage bzw. vor dem Ausschalten des Motors gemessen wird. Weiterhin wird nach dem Ausschalten des Motors die Bewegung der Wischer nicht mehr detektiert. D.h. die Dynamik des Wischersystems wird während des Bestromens des Motors gemessen. Die lokalen Bedingungen auf der Scheibe unterscheiden sich jedoch hinsichtlich des Benetzungsgrades. Deswegen ist die Ableitung der Korrekturgröße von der Winkelgeschwindigkeit des Motors allein zur Einhaltung der Parkstellung schwierig.

Ein weiterer Nachteil hierbei ist, daß diese Wischanlage die Wischer lediglich in die Parklage ablegt. Die Einhaltung der Umkehrlagen durch die Wischer im Wischbetrieb wird nicht ermöglicht.

Nachteilig ist weiterhin die kostenerhöhende Verwendung einer Kontaktscheibe und eines Drehzahlfühlers.

### Vorteile der Erfindung

Die erfindungsgemäße Scheibenwischvorrichtung mit den kennzeichnenden Merkmalen des Hauptanspruchs hat den Vorteil, den Wischer im Wischbetrieb in jeder Umkehrlage exakt an vorgegebenen Positionen zu stoppen. Dabei werden die lokalen Bedingungen auf der Scheibe nach dem Abschalten des Motors vor den Umkehrlagen bis zu diesen berücksichtigt. Dazu werden die Nachlaufimpulse nach dem Abschalten des Motors vor einer Umkehrlage bis zu dem Stillstand des Motors bzw. Wischers durch einen Zähler gezählt. D.h. die Dynamik des Wischersystems wird nach dem Abschalten des Motors während des Bremsvorgangs ermittelt.

Durch die in den Unteransprüchen aufgeführten Maßnahmen ergeben sich vorteilhafte Weiterbildungen und Verbesserungen der im Hauptanspruch angegebenen Merkmale. Besonders vorteilhaft ist ein weiterer Zähler, der über den gesamten Wischbereich Wegimpulse zählt und so die Zuordnung jeder Position des Wischers zu einem bestimmten Zählerstand ermöglicht.

In vorteilhafter Weise können die Wegimpulse und Nachlaufimpulse durch einen einzigen Zähler erfaßt werden.

Vorteilhaft ist weiterhin das Zurücksetzen und Kalibrieren des Zählers, wenn der Wischer in seine Parklage läuft.

Aufgrund des einfachen Aufbaus der Vorrichtung ohne Positionsschalter und dergleichen ist dies eine kostensparende Lösung, die außerdem die Möglichkeiten der konstruktiven Auslegung der Leiterplatte erhöht.

Alternativ ist vorteilhaft, daß die Scheibenwischvorrichtung ebenfalls zur anschlagsfreien Ablage der Wischer in einer Parklage nach Ausschalten eines Betriebsschalters geeignet ist.

### Zeichnung

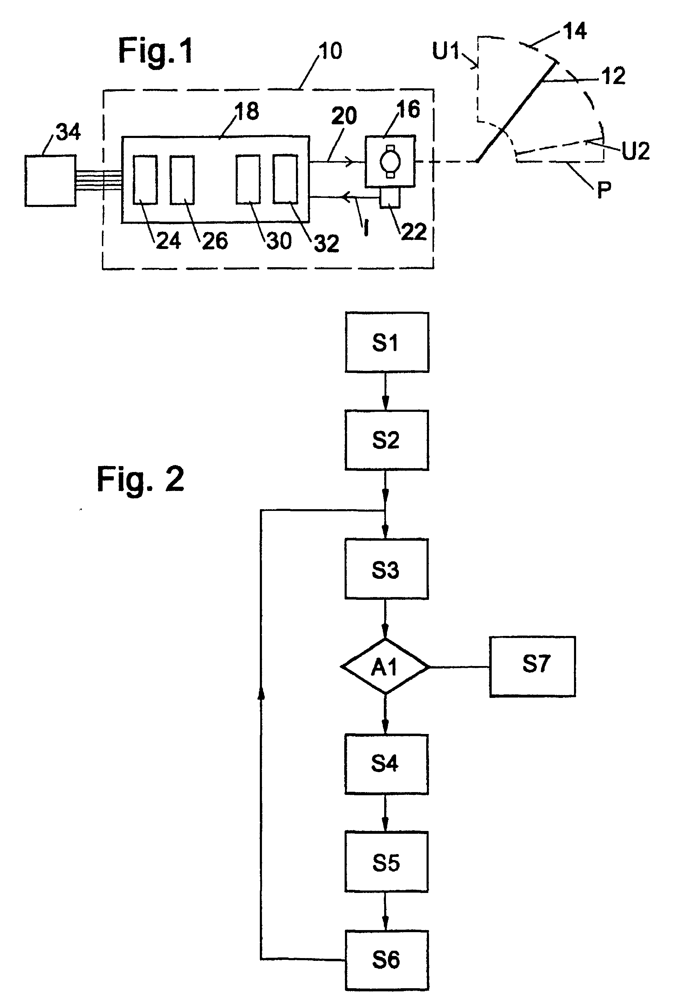

Ausführungsbeispiele der Erfindung sind in der Zeichnung dargestellt und in der nachfolgenden Beschreibung näher erläutert. Es zeigt Figur 1 eine Vorrichtung zur Steuerung eines Scheibenwischers und Figur 2 ein Ablaufdiagramm.

### Beschreibung des Ausführungsbeispiels

Figur 1 zeigt eine Scheibenwischvorrichtung 10 für eine Kraftfahrzeugscheibenwischanlage mit einem Wischer 12, der einen Wischbereich 14 einer nicht dargestellten Windschutzscheibe wischt. Der Wischbereich 14 ist durch eine erste Umkehrlage U1 und eine zweite Umkehrlage U2 bzw. einer Parklage P des Wischers 12 begrenzt. Zum Ein- und Ausschalten der Scheibenwischvorrichtung 10 oder zur Anwahl eines Wischbetriebs wird ein Betriebsschalter 34 betätigt. Bei der ausgeschalteten Scheibenwischvorrichtung 10 ist der Wischer 12 üblicherweise in der Parklage P abgelegt. Der Wischer 12 wird durch einen von Schaltsignalen 20 einer Steuerung 18 angesteuerten, reversierbaren Motor 16 angetrieben. Als Steuerung 18 wird beispielsweise ein Mikrocontroller verwendet. An dem reversierbaren Motor 16 ist in an sich bekannter Weise ein Doppelrelais angeordnet, dessen zwei Relais unabhängig voneinander durch Schaltsignale 20 der Steuerung 18 auf Masse oder auf positive Spannung umschaltbar sind, so daß der Motor 16 abgebremst bzw. kurzgeschlossen oder wahlweise in eine von beiden Richtungen bestromt wird.

Dem Motor 16 zugeordnet ist ein Impulsgeber 22, dessen Impulse I der Steuerung 18 zugeführt werden. Der Impulsgeber 22 wird derart realisiert, daß ein mit der Ankerwelle des Motors 16 umlaufender Ringmagnet an einem oder mehreren feststehenden Hall-Sensoren eine bekannte Anzahl Impulse I je Ankerumdrehung abgibt. Diese Impulsfolge wird über einen Interrupteingang des Microcontrollers eingelesen, der zur Auswertung der durch die Impulse I ausgelösten Interrupts einen ersten Zähler 24 und einen zweiten Zähler 26 aufweist, des weiteren einen flüchtigen Speicher 30 und einen nichtflüchtigen Speicher 32.

Der Betriebsschalter 34 ist über eine mehradrige Verbindung an die Steuerung 18 angeschlossen und kann mehrere Anwahlmöglichkeiten für unterschiedliche Wischbetriebe des Wischers 12 aufweisen: beispielsweise Intervallwischen, Dauerwischen oder Automatikbetrieb bei Verwendung eines den Benetzungszustand der Scheibe detektierenden Regensensors.

Der erste Zähler 24 zählt kontinuierlich die vom Impulsgeber 22 abgegebenen Impulse I, so daß diese als Wegimpulse Iw bezeichneten Impulse I den Umdrehungen der Ankerwelle des Motors 16 und damit indirekt dem Weg des Wischers 12 zugeordnet sind. Dem Zählerstand von Null des ersten Zählers 24 ist die Parklage P des Wischers 12 zugeordnet. Wird der Wischer 12 auf die erste Umkehrlage U1 zubewegt, summiert der erste Zähler 24 die Wegimpulse Iw auf, d.h. der erste Zähler 24 wird inkrementiert. Bei Erreichen der ersten Umkehrlage U1 nimmt der Zählerstand einen vorgegebenen Sollwert Iw(U1) von beispielsweise 180 Inkrementen (Ink) an, wobei der Motor 16 rechtzeitig vorher abgeschaltet wird. Wird der Wischer 12 zur zweiten Umkehrlage U2 zurückbewegt nimmt der Zählerstand entsprechend der Anzahl der vom Impulsgeber 22 abgegebenen Impulse I wieder ab. In der zweiten Umkehrlage U2 weist der erste Zähler also einen ebenfalls vorgegebenen Sollwert Iw(U2) auf, der wesentlich kleiner ist als der Sollwert der ersten Umkehrlage Iw(U1) = 180 Ink, der jedoch größer ist als der der Parklage P zugeordnete Zählerstand Iw(P) = 0 Ink, beispielsweise Iw(U2) = 40 Ink. Auch hier wird der Motor 16 vorzeitig von Steuerung 18 ausgeschaltet und abgebremst.

Der zweite Zähler 26 zählt dagegen die durch den Impulsgeber 22 abgegebenen Impulse I erst von dem Zeitpunkt an, an dem der Motor 16 durch ein Schaltsignal 20 der Steuerung 18 vor einer Umkehrlage U1, U2 ausgeschaltet bzw. kurzgeschlossen wird. Der Motor 16 kommt daraufhin nicht sofort zum Stillstand, sondern lediglich mit einer gewissen Verzögerung. Die Impulse I, die während dieser Verzögerung bis zum Stillstand des Motors 16 bzw. des Wischers 12 abgegeben werden, werden durch den zweiten Zähler 26 erfaßt. Im Folgenden werden diese Impulse I als Nachlaufimpulse In bezeichnet. Der zweite Zähler 26 addiert immer auf und wird bei Erreichen jeder Umkehrlage U1, U2 mit dem Einschalten des Motors 16 wieder zurückgesetzt.

Figur 2 veranschaulicht in einem Ablaufdiagramm mit den Schritten S1 bis S7 und der Abzweigung A1 die Wirkungsweise der Scheibenwischvorrichtung 10 nach Figur 1, die nachfolgend erläutert wird.

### S1 (Eichphase):

Bei Inbetriebnahme der Scheibenwischvorrichtung 10 durch den Kraftfahrzeugfahrer, beispielsweise durch Anwählen des Dauerwischbetriebs am Betriebsschalter 34, gibt die Steuerung 18 ein Eichschaltsignal 20 an das Doppelrelais, so daß der Motor 16 in die Richtung der Parklage P bestromt wird. Der Wischer 12 wird dort durch den mechanischen Anschlag gestoppt. Es tritt also die Situation auf, daß der Motor 16 weiterhin bestromt wird, wobei gleichzeitig ein Stillstand des Motors 16 vorliegt (keine Impulse I innerhalb einer Zeitspanne von beispielsweise 20 ms). Dies wird von der Steuerung 18 erkannt und führt zu einem Zurücksetzten des ersten Zählers 24 durch diese (Eichung).

Durch ein Startschaltsignal 20 wird der Motor 16 nun in die anderen Richtung bestromt, so daß der Wischer 12 die Parklage P verläßt, die zweite Umkehrlage U2 überwischt und sich in Richtung der ersten Umkehrlage U1 fortbewegt. Der Impulsgeber 22 detektiert die Umdrehungen der Ankerwelle des Motors 16 und erzeugt demgemäß eine bestimmte Anzahl von Impulsen I je Umdrehung der Ankerwelle, die der Steuerung 18 zugeführt werden.

Die Steuerung 18 aktiviert mit demselben Startschaltsignal 20 ebenfalls den ersten Zähler 24 derart, daß dieser im Folgenden alle durch den Impulsgeber 22 abgegebenen und in Interrupts umgewandelte Impulse I aufsummiert.

### S2 (Einschaltphase) :

Um beim erstmaligen Anfahren des Wischers 12 an die erste Umkehrlage U1 den Wischer 12 zu stoppen und das Überwischen der Umkehrlage U1 durch den Wischer 12 zuverlässig zu verhindern, muß der Motor 16 hinreichend früh durch die Steuerung 18 ausgeschaltet bzw. kurzgeschlossen werden. Dazu ist im nichtflüchtigen Speicher 32 eine vorgegebene Impulszahl Iv abgelegt, die der für das vorliegende Wischersystem maximal zulässigen Nachlaufimpulszahl In entspricht. Die vorgegebene Impulszahl Iv wird von dem ebenfalls im nichtflüchtigen Speicher 32 abgelegten Sollwert Iw(U1) für die erste Umkehrlage U1 abgezogen und definiert so einen Zählerstand Ia(U1) bei dem der Motor 16 vor der ersten Umkehrlage U1 ausgeschaltet wird. Bei Erreichen des durch die Steuerung 18 berechneten Zählerstands Ia(U1) durch den ersten Zähler 24 wird mit einem ersten Schaltsignal 20 der Ausschaltvorgang des Motors 16 eingeleitet (beide Relais auf Masse). Daher wird bei Inbetriebnahme der Scheibenwischvorrichtung in der Einschaltphase das rechtzeitige Anhalten des Wischers 12 immer gewährleistet.

Ist beispielsweise Iw(U1) = 180 Ink und Iv = 30 Ink, dann wird der Wischermotor 16 ausgeschaltet, sobald der Zählerstand des ersten Zählers 24 den Wert Ia(U1) = Iw(U1) - Iv = 150 Ink erreicht hat.

Ebenfalls mit dem ersten Schaltsignal 20 wird der zweite Zähler 26 aktiviert. Dieser zählt die Nachlaufimpulse In(U1), bis der Motor 16 zum Stillstand kommt. Der Stillstand wird detektiert, wenn die Impulse I (bzw. Interrupts) innerhalb der in der Steuerung 18 vorgegebenen Zeitspanne ausbleiben. Beispielsweise ist In(U1) = 25 Ink.

Unabhängig von dem zweiten Zähler 26 zählt der erste Zähler 24 kontinuierlich weiter.

### S3 (Erster Umkehrvorgang):

Der Umkehrvorgang zur Reversierung der Drehrichtung des Motors 16 wird nun durch ein zweites Schaltsignal 20 der Steuerung 18 eingeleitet, wenn der Stillstand des Motors 16 detektiert wurde. Dadurch wird ein Relais derart bestromt, daß der Motor 16 in die entgegengesetzte Richtung und der Wischer 12 zur zweiten Umkehrlage U2 läuft. Ebenfalls mit diesem zweiten Schaltsignal 20 wird der erste Zähler 24 derart eingestellt, daß er alle weiteren Impulse I von seinem bisherigen maximalen Zählerstand abzieht. Ferner wird der den Nachlauf des Wischers 12 bei der Umkehrlage U1 kennzeichnende Zählerstand In(U1) des zweiten Zählers 26 in den flüchtigen Speicher 30 geschrieben und anschließend der zweite Zähler 26 durch die Steuerung 18 auf Null zurückgesetzt.

### A1:

Betätigt der Fahrer des Kraftfahrzeugs zwischenzeitlich den Betriebsschalter 34 um die Scheibenwischvorrichtung 10 auszuschalten, so wird dies an dieser Stelle von der Steuerung 18 berücksichtigt und es wird mit dem Schritt S7 anstelle Schritt S4 fortgefahren.

### S4:

Die Steuerung 18 greift fortwährend auf die im flüchtigen Speicher 30 abgelegte Nachlaufimpulszahl In(U1) = 25 Ink des zweiten Zählers 26 und auf den aktuellen Zählerstand der Wegimpulse Iw des ersten Zählers 24 zu und veranlaßt über ein drittes Schaltsignal 20 zum Ausschalten des Motors 16, daß dieser vor der zweiten Umkehrlage U2 kurzgeschlossen wird, wenn der Zählerstand des ersten Zählers 24 den Wert Ia(U2) = Iw(U2) + In(U1) = 65 Ink erreicht hat. Ferner wird der flüchtige Speicher 30 gelöscht.

Ebenfalls mit dem dritten Schaltsignal 20 wird der zweite Zähler 26 erneut aktiviert, der durch die Nachlaufimpulse In(U2) des Motors 16 bis zu dessen Stillstand inkrementiert wird, beispielsweise In(U2) = 20 Ink. Aufgrund der zuvor gezählten Nachlaufimpulszahl In(U1) und der innerhalb der kurzen Zeitspanne von einer halben Wischzyklusdauer (beispielsweise 500 bis 600 ms bei Stufe 1 im Dauerwischbetrieb) unveränderten Niederschlagsstärke kommt der Motor 16 bzw. der Wischer 12 direkt in der zweiten Umkehrlage U2 zum Stillstand.

Unabhängig von dem zweiten Zähler 26 subtrahiert der erste Zähler 24 weiterhin die Impulse I von seinem Zählerstand und weist den Zählerstand Iw(U2) = 40 Ink auf, wenn der Wischer 12 seine zweite Umkehrlage U2 einnimmt.

### S5 (Zweiter Umkehrvorgang):

Durch ein viertes Schaltsignal 20 der Steuerung 18 wird der Motor 16 in der zweiten Umkehrlage U2 wieder eingeschaltet, wobei die Drehrichtung des Motors 16 reversiert ist, so daß der Wischer 12 sich wieder in Richtung der ersten Umkehrlage U1 zubewegt. Daraufhin werden die gezählten Nachlaufimpulse In(U2) = 20 Ink des zweiten Zählers 26 in den flüchtigen Speicher 30 geschrieben und der Zählerstand auf Null zurückgesetzt. Ebenfalls mit dem vierten Schaltsignal 20 wird der erste Zähler 24 wieder umgeschaltet, so daß er die Impulse I wieder aufsummiert.

### S6:

Vor Erreichen der ersten Umkehrlage U1 wird der Motor 16 mit dem ersten Schaltsignal 20 (s.o. Schritt S2) wieder ausgeschaltet. Da im Gegensatz zu Schritt S2 dieses Mal eine kurz zuvor gezählte Nachlaufimpulszahl In(U2) = 20 Ink im flüchtigen Speicher 30 abgelegt wurde, kann an dieser Stelle die Steuerung 18 darauf zurückgreifen und das erste Schaltsignal 20 auslösen, wenn der Zählerstand des ersten Zählers 24 dem Wert Ia(U1) = Iw(U1) - In(U2) = 160 Ink entspricht. Ferner wird der flüchtige Speicher 30 wieder gelöscht.

An dieser Stelle wird mit Schritt S3 fortgefahren.

### S7 (Abschaltvorgang):

Wird die Scheibenwischvorrichtung 10 in einem der Schritte S2 bis S6 vom Kraftfahrzeugfahrer ausgeschaltet, so fährt der Wischer 12 nach dem Erreichen des Schrittes S3 über die zweite Umkehrlage U2 hinaus gegen die Parklage P und wird dort durch den mechanischen Anschlag gestoppt. Da der Motor 16 weiterhin bestromt wird und gleichzeitig keine Impulse I innerhalb der oben erwähnten Zeitspanne erfaßt werden, führt dies zu einem Zurücksetzten des ersten Zählers 24 durch die Steuerung 18.

In einem verbesserten Ausführungsbeispiel wird lediglich ein Zähler 24 für die Messung von Wegimpulsen Iw und Nachlaufimpulsen In verwendet, indem der Zählerstand Ia(U1), Ia(U2) zum Abschalten des Motors 16 jeweils im flüchtigen Speicher 30 zwischengespeichert wird. Als Nachlaufimpulse In(U1), In(U2) werden die Differenzen der Zählerstände beim Ausschalten des Motors Ia(U1), Ia(U2) und beim Stillstand des Motors 16 in der jeweiligen Umkehrlage Iw(U1), Iw(U2) gebildet und zwischengespeichert. Wie bereits oben beschrieben werden die - hierbei berechneten - Nachlaufimpulse In(U1), In(U2) zur Berechnung des Zählerstands zum Abschalten des Motors Ia(U1), Ia(U2) in der folgenden Umkehrlage U1, U2 herangezogen. Der Zähler 24 zählt daher kontinuierlich die Wegimpulse Iw mit und wird lediglich beim Ein- und Ausschalten der Scheibenwischvorrichtung 10, wenn sich der Wischer 12 in der Parklage P befindet, durch die Steuerung 18 zurückgesetzt bzw. geeicht.

Alternativ zu diesem Ausführungsbeispiel werden anstelle der kontinuierlichen Zählung von Wegimpulsen Iw diese lediglich in Teilen des Wischbereichs 14, vorzugsweise nahe den Umkehrlagen U1, U2, gezählt. Hierbei wird durch beispielsweise einen oder mehrere Kontaktschalter erst ab Auslösen eines Kontaktsignales gezählt. Der Kontaktschalter kann als Kontaktscheibe am Stirnrad des Motors mit einem an der Leiterplatte der Steuerung 18 abgebrachten Kontaktfinger realisiert sein. Damit entfällt das Kalibrieren des (ersten) Zählers 24 in der Parklage P, da dieser nun durch die Kontaktscheibe jedesmal an einen oder mehreren definierten Punkten eingeschaltet wird.

Sofern also die Kalibrierung des (ersten) Zählers 24 über einen weiteren Kontaktschalter oder Absolutwertgeber im Wischbereich 14 vorgenommen wird, kann der Wischer 12 in die Parklage P ebenfalls nach dem oben beschriebenen Verfahren abgelegt werden. In diesem Fall wird der mechanische Anschlag des Wischers 12 in der Parklage P verhindert.

Das Umschalten zwischen den verschiedenen Wischbetrieben, z.B. Intervallwischen, Dauerwischen oder Automatikbetrieb, geschieht auf bekannte Weise, ohne daß es dabei zu einer Störung des erfindungsgemäßen Verfahrens bzw. zur unerwünschten Beeinflussung der Position des Wischers 12 in den Umkehrlagen U1, U2 kommt. Dies gilt ebenfalls bei Verwendung eines Regensensors.

## Patentansprüche

1. Scheibenwischvorrichtung (10) mit wenigstens einem zwischen zwei Umkehrlagen (U1, U2) pendelndem Wischer (12), der von einem drehrichtungsumkehrbaren Motor (16) angetrieben wird, mit einem Impulsgeber (22) zur Erzeugung von Impulsen (I) in Abhängigkeit der Wischerbewegung, vorzugsweise in Abhängigkeit der Umdrehung der Ankerwelle des Motors (16), die einer Steuerung (18) zur Ansteuerung des Motors (16) zugeführt werden und durch einen in dieser (18) enthaltenen Zähler (24, 26) gezählt werden, **dadurch gekennzeichnet, daß** der Zähler (24, 26) vom Ausschalten des Motors (16) vor einer Umkehrlage (U1, U2) die den Nachlauf des Wischers (12) bzw. Motors (16) kennzeichnende bis zu dessen Stillstand auftretende Anzahl von Impulsen (In) zählt und daß die Steuerung (18) in Abhängigkeit der gezählten bzw. berechneten Nachlaufimpulse (In) vor Erreichen der nachfolgenden Umkehrlage (U1, U2) oder Parklage (P) mindestens ein Schaltsignal (20) zum Ausschalten des Motors (16) und/oder zum Umkehren seiner Drehrichtung abgibt.

2. Scheibenwischvorrichtung nach Anspruch 1, **dadurch gekennzeichnet, daß** die Steuerung (18) einen Zähler (24, 26) aufweist, der wenigstens über einen Teil des Wischbereichs (14) Wegimpulse (Iw) vor und/oder zurück zählt.

3. Scheibenwischvorrichtung nach Anspruch 1, **dadurch gekennzeichnet, daß** vor dem erstmaligen Erreichen der ersten Umkehrlage (U1) die Steuerung (18) in Abhängigkeit einer in der Steuerung (18) vorgegebenen Anzahl von Impulsen (Iv) ein Schaltsignal (20) zum Ausschalten des Motors (16) und/oder zum Umkehren seiner Drehrichtung abgibt.

4. Scheibenwischvorrichtung nach Anspruch 2, **dadurch gekennzeichnet, daß** die Steuerung (18) den Zähler (24, 26) bei Erreichen der Parklage (P) zurücksetzt, insbesondere bei einem mechanischen Anschlag des Wischers (12), wenn der Impulsgeber (22) bei fortwährender Bestromung des Motors (16) keine Impulse (I) an die Steuerung (18) abgibt.

5. Verfahren zum Betreiben einer Scheibenwischvorrichtung (10) mit wenigstens einem zwischen zwei Umkehrlagen (U1, U2) pendelndem Wischer (12), der von einem drehrichtungsumkehrbaren Motor (16) angetrieben wird, mit einem Impulsgeber (22) zur Erzeugung von Impulsen (I) in Abhängigkeit der Wischerbewegung, vorzugsweise in Abhängigkeit der Umdrehung der Ankerwelle des Motors (16), die einer Steuerung (18) zur Ansteuerung des Motors (16) zugeführt werden und durch einen in dieser enthaltenen Zähler (24, 26) gezählt werden, **dadurch gekennzeichnet, daß** vom Zähler (24, 26) nach Ausschalten des Motors (16) vor einer Umkehrlage (U1, U2) die den Nachlauf des Wischers (12) bzw. Motors (16) kennzeichnende bis zu dessen Stillstand auftretende Anzahl von Impulsen (In) gezählt wird und daß von der Steuerung (18) in Abhängigkeit der gezählten bzw. berechneten Nachlaufimpulse (In) vor Erreichen der nachfolgenden Umkehrlage (U1, U2) oder Parklage (P) mindestens ein Schaltsignal (20) zum Ausschalten des Motors (16) und/oder zum Umkehren seiner Drehrichtung abgegeben wird.

## Claims

1. Wiper device (10) having at least one wiper (12) which oscillates between two reversal points (U1, U2) and which is driven by a motor (16) with a reversible direction of rotation and with a pulse transmitter (22) for generating pulses (I) as a function of the wiper movement, preferably as a function of the rotation of the armature shaft of the motor (16), which pulses (I) are fed to a controller (18) for actuating the motor (16) and are counted by a counter (24, 26) which is contained in said controller (18), **characterized in that** the counter (24, 26) counts, from the switching off of the motor (16) before a reversal point (U1, U2), the number of pulses (In) which characterizes the running on of the wiper (12) or motor (16) and which occurs up to it coming to a standstill, and **in that** the controller (18) outputs at least one switching signal (20) for switching off the motor (16) and/or for reversing its direction of rotation, as a function of the counted or calculated running-on pulses (In) before the subsequent reversal point (U1, U2) or parking position (P) is reached.

2. Wiper device according to Claim 1, **characterized in that** the controller (18) has a counter (24, 26) which counts displacement pulses (Iw) forwards and/or backwards at least over part of the wiping region (14).

3. Wiper device according to Claim 1, **characterized in that**, before the first reversal point (U1) is first reached, the controller (18) outputs, as a function of a number of pulses (Iv) predefined in the controller (18), a switching signal (20) for switching off the motor (16) and/or for reversing its direction of rotation.

4. Wiper device according to Claim 2, **characterized in that** the controller (18) resets the counter (24, 26) when the parked position (P) is reached, in particular when there is a mechanical stop of the wiper (12) when the pulse transmitter (22) does not output any pulses (I) to the controller (18) when the motor (16) continues to be energized.

5. Method for operating a wiper device (10) having at least one wiper (12) which oscillates between two reversal points (U1, U2) and which is driven by a motor (16) with a reversible direction of rotation and with a pulse transmitter (22) for generating pulses (I) as a function of the wiper movement, preferably as a function of the rotation of the armature shaft of the motor (16), which pulses (I) are fed to a controller (18) for actuating the motor (16) and are counted by a counter (24, 26) which is contained in said controller (18), **characterized in that**, after the motor (16) is switched off before a reversal point (U1, U2), the number of pulses (In) which characterizes the running on of the wiper (12) or motor (16) and which occurs up to it coming to a standstill are counted by the counter (24, 26), and **in that** at least one switching signal (20) for switching off the motor (16) and/or for reversing its direction of rotation is output as a function of the counted or calculated running-on pulses (In) before the subsequent reversal point (U1, U2) or parking position (P) is reached.

## Revendications

1. Dispositif d'essuie-glace (10) comportant au moins un balai d'essuie-glace (12) effectuant un mouvement pendulaire entre deux positions d'inversion de mouvement (U1, U2), ce balai étant entraîné par un moteur (16) à mouvement de rotation réversible,
un générateur d'impulsions (22) pour générer des impulsions (I) en fonction du mouvement du balai, de préférence en fonction de la rotation de l'arbre de l'induit du moteur (16), ces impulsions étant fournies à une commande (18) pour commander le moteur (16), et étant comptées par un compteur (24, 26) de la commande (18),
**caractérisé en ce que**
le compteur (24, 26) compte le nombre d'impulsions (In), produites entre l'arrêt du moteur (16) avant une position d'inversion de mouvement (U1, U2) qui **caractérise** la poursuite du mouvement du balai (12) ou du moteur (16) jusqu'à son arrêt, et
en fonction des impulsions de poursuite de mouvement (In), comptées ou calculées avant d'atteindre la position d'inversion de mouvement suivante (U1, U2) ou position de rangement (P), la commande (18), émet au moins un signal de commutation (20) pour couper le moteur (16) et/ou pour inverser son sens de rotation.

2. Dispositif d'essuie-glace selon la revendication 1,
**caractérisé en ce que**
la commande (18) comporte un compteur (24, 26) qui compte et/ou décompte les impulsions de course (Iw) sur au moins une partie de la plage de balayage (14).

3. Dispositif d'essuie-glace selon la revendication 1,
**caractérisé en ce que**
avant d'atteindre la première fois la première position d'inversion de mouvement (U1), en fonction d'un nombre d'impulsions (Iv) prédéterminé dans la commande (18), cette commande (18) émet un signal de commutation (20) pour couper le moteur (16) et/ou pour inverser son sens de rotation.

4. Dispositif d'essuie-glace selon la revendication 2,
**caractérisé en ce que**
la commande (18) remet à l'état initial le compteur (24, 26) lorsqu'on atteint la position de rangement (P) notamment pour une butée mécanique du balai d'essuie-glace (12), lorsque le générateur d'impulsions (22) n'envoie plus d'impulsions (I) à la commande (18) alors que le moteur (16) continue d'être alimenté.

5. Procédé de mise en oeuvre d'un dispositif d'essuie-glace (10) comportant au moins un balai (12) effectuant un mouvement pendulaire entre deux positions d'inversion de mouvement (U1, U2), ce balai étant entraîné par un moteur (16) à mouvement de rotation réversible,
un générateur d'impulsions (22) pour générer des impulsions (I) en fonction du mouvement du balai d'essuie-glace, notamment en fonction de la rotation de l'arbre de l'induit du moteur (16), ces impulsions étant fournies à une commande (18) pour commander le moteur (16) et étant comptées par un compteur (24, 26) appartenant à cette commande,
**caractérisé en ce que**
après la coupure du moteur (16), avant une position d'inversion de mouvement (U1, U2), le compteur (24, 26) compte le nombre d'impulsions (In) produites pendant la poursuite du mouvement du balai (12) ou du moteur (16) et caractérisant ce mouvement jusqu'à l'arrêt, et
en fonction des impulsions de poursuite de mouvement (In) comptées ou calculées, avant d'atteindre la position d'inversion de mouvement suivante (U1, U2) ou la position de rangement (P), la commande (18) émet au moins un signal de commutation (20) pour couper le moteur (16) et/ou pour inverser son sens de rotation.
